# EUROPEAN PATENT APPLICATION

(11) **EP 4 386 043 A1**
(43) Date of publication of application: **19.06.2024**
(21) Application number: 22214304.2
(22) Date of filing: 16.12.2022
(51) Int. Cl.: C08J 7/04, B32B 27/08, B32B 27/28, B32B 27/32

(54) **MONO-MATERIAL FILM AND METHOD OF PRODUCTION THEREOF**

(71) Applicant: Mondi AG, 1030 Wien (AT)
(72) Inventor: WEINTUCH, Jan, 83101 Rohrdorf (DE); STECHER, Thomas, 83556 Griesstätt (DE)
(74) Representative: Puchberger & Partner Patentanwälte

(57) **Abstract**

A film (1) comprising a carrier substrate (10, 110) substantially comprising an oriented and at least partially crystalline thermoplastic polymer, and a coating layer (20, 120) being an unoriented thermoplastic polymer coated on at least one side of the carrier substrate (10); wherein, the combined carrier substrate (10) and the coating layer (20) substantially consists of at least 70%, preferably at least 75%, more preferably at least 80%, more preferably at least 85%, more preferably at least 90%, most preferably at least 95% identical polymer compound, and a method for manufacturing a film, thereof.

## Description

### Technical field

The present invention relates to a film, for example, used with release liners, comprising a carrier layer and a coating layer. In particular, the invention relates to the composition and type of materials of each of the layers, and a method of production thereof.

### Background

Increasing globalization goes hand in hand with growing waste disposal. Among many other industrial sectors, the packaging industry and/or the industry providing for the decoration of products also aim at reducing waste production, while maintaining, and even improving the properties and functionality of the products.

Take for instance, release liners, which can be used for many different applications, such as graphic arts, tapes, envelopes, industrial use cases, fiber composites, medical, hygiene, labels or the like, are provided with an adhesive layer, wherein the release liner can be released (or also referred to as revealed/peeled off). Such a film-based release liner should have certain properties to provide a consistent release performance, for instance, being secure and stable, allow easy application, and also being cost-effective to manufacture. Therefore, it is desired that these products have a composition such that it can be easily recyclable without compromising their mechanical properties.

In the prior art, attempts have been made to meet these requirements.

For instance, there are release liners that are based on polyethylene (PE), paper and silicone. Moreover, some release liners may be based on a primer or on polyethylene-terephthalate (PET). Other examples include structured films based on PE, polypropylene (PP), PET or polyamides (PA) and silicone. Further known examples of structured release liners are based on biaxially oriented (BO) based polymers (e.g. BOPP, BOPET, BOPA or BOPE films and silicone).

However, the suggested solutions, according to the prior art, have several disadvantages. For instance, some of them are hybrid materials and/or multilayer materials of different kinds of polymers. This creates difficulties in recycling and makes recycling less effective and more cost intensive. Moreover, some of the suggested solutions require chemical or energetic recycling. Furthermore, some of them reveal different mechanical properties due to different manufacturing processes required. Additionally, some of them cannot be processed, e.g. embossed as needed or at least not to a sufficient extent and not in a flexible manner.

In view of the above drawbacks, it is important to provide improved films, for instance, films being used as release liners.

Thus, it is an object of the present invention to overcome the above disadvantages at least partially.

### Summary of the invention

The objects are achieved, at least partly, by a film and a method for manufacturing a film, according to the subject-matter of the independent claims. Further aspects of the present disclosure are defined in the dependent claims. Since the film and the method for manufacturing a film both relate to films, it will be understood that advantages and/or features of the film may also apply to the method and *vice versa.*

### Film

In particular, the object is achieved by a film comprising: a carrier substrate substantially comprising an oriented and at least partially crystalline thermoplastic polymer, and a coating layer being an unoriented thermoplastic polymer coated on at least one side of the carrier substrate, wherein, the combined carrier substrate and the coating layer substantially consists of at least 70%, more preferably at least 75%, more preferably at least 80%, more preferably at least 85%, more preferably at least 90%, most preferably at least 95% identical polymer compound.

This has a particular advantage that substantially identical polymer compounds are applied, which enables improved recyclability. In particular, the film may be easily recycled as no cumbersome separation of different polymer compounds that are coated to one another needs to be performed, as required by films according to the prior art. In particular, no chemical or energetic recycling is required. The film can be recycled by way of mechanical recycling means, which is a mature technique, easy to handle and cost-effective. Thus, the efficiency of recycling is improved significantly.

In addition, attributable to at least the carrier substrate comprising oriented and at least partially crystalline thermoplastic polymer, the film is provided with sufficient mechanical strength and structural integrity. This brings along advantages in terms of mechanical properties, and longevity and increases the use cases of the film. In particular, the tensile strength may be significantly higher compared to unoriented films having the same polymer.

The coating layer being an unoriented thermoplastic polymer coated on at least one side of the carrier substrate, has the advantage that structuring or embossing is facilitated. This allows for the creation of a structure so as to improve, for instance, the release properties of the coating layer. Further, it is beneficial that this coating layer allows for larger embossing structures than coating layers which may only allow for "holographic" films. Said holographic films are usually limited to micro-embossing (e.g. a low depth of the embossing structure). As a further example, sufficient structuring may aid in facilitating the repositioning of the film. It is noted that embossing would usually not be possible to such a great extent when applied to an oriented polymer. Typically, the crystallinity of such an oriented polymer may only allow for embossing structures to a low extent (e.g. lower than about 5 µm).

Surprisingly, the inventors found that the combined carrier substrate and coating layer provided a novel combination that provides excellent material properties and recyclability.

A further advantage of the film is that it (whilst being substantially a mono-material) may be soft and flexible such that it can adapt to any shape of a structural part on which it is supposed to be applied to. This may be understood such that if it is used in the context of wrapping an industrial good, e.g. a car, it may smoothly resemble the rounded and/or angular contour of the car.

The film may be used, for instance, as part of a release liner, as further described herein. Particular examples of applications are graphic art, tapes, envelopes, industrial use cases, fiber composites, medical, hygiene, labels or the like. Examples of graphic art may be advertising films, traffic signs, car wrapping and structured liners. In terms of fiber composites, suitable use cases may be aerospace construction components, and consumer recreational products.

The film may, alternatively or additionally, be used in different fields of the industry, which are not particularly limited to release liners. In some of these fields, it is appreciated to add a barrier layer. Further examples of use cases of the film as described herein include the food industry, pet cares, and home and personal care. The film may be part of products used therein, such as products relating to cheese and dairy, crisps and snacks, fresh and processed meat, fish and poultry, frozen food, sugar and confectionery, tea and coffee, dry pet food, snacks and treats for pet care, wet pet food, cleaning products, detergents, hygiene, personal care and cosmetics.

The term *"identical"* polymer may be understood in such a manner that, for instance, if PP (as defined elsewhere herein) is used for the carrier substrate, substantially PP is also used for the coating layer. The term "substantially" in this regard is understood such that, overall, at least 70% of PP is comprised. It is noted that impurities and/or slight manufacturing differences may be taken into account when determining the percentage value. Hence, the percentage value could slightly deviate from the preferred percentage value.

The term *"oriented"* polymer may comprise at least mono and biaxially oriented polymers as described elsewhere herein.

Preferably, the combined carrier substrate and coating layer has a thickness such that it is capable of being structured or embossed at a depth of between 5 µm and 50 µm.

Preferably, the combined carrier substrate and coating layer may have a thickness such that it is capable of being structured of at least 5 µm, preferably at least 10 µm, more preferably at least 15 µm, more preferably at least 20 µm, more preferably at least 25 µm, more preferably at least 30 µm, more preferably at least 35 µm, more preferably at least 40 µm, more preferably at least 45 µm, most preferably at least 50 µm.

Alternatively or additionally, the combined carrier substrate and coating layer may have a thickness such that it is capable of being structured of at most 90 µm, more preferably at most 85 µm, more preferably at most 80 µm, more preferably at most 75 µm, more preferably at most 70 µm, more preferably at most 65 µm, more preferably at most 60 µm, more preferably at most 55 µm, most preferably at most 50 µm.

This has the advantage that structures of sufficient depth can be imparted to the carrier substrate. This makes the film particularly useful in the many applications described herein.

The depth may be measured, in one example, along a substantially straight perpendicularly to a main surface of the film. This complies with the typical understanding of the depth of the skilled person.

Preferably, the coating layer has a thickness such that it is capable of being structured or embossed at a depth of between 5 µm and 50 µm.

Preferably, the coating layer may have a thickness such that it is capable of being structured of at least 5 µm, preferably at least 10 µm, more preferably at least 15 µm, more preferably at least 20 µm, more preferably at least 25 µm, more preferably at least 30 µm, more preferably at least 35 µm, more preferably at least 40 µm, more preferably at least 45 µm, most preferably at least 50 µm.

Alternatively or additionally, the coating layer may have a thickness such that it is capable of being structured of at most 90 µm, more preferably at most 85 µm, more preferably at most 80 µm, more preferably at most 75 µm, more preferably at most 70 µm, more preferably at most 65 µm, more preferably at most 60 µm, more preferably at most 55 µm, most preferably at most 50 µm.

This has the advantage that particularly the coating layer may be provided with an embossing structure. This can be easily achieved, as the coating layer is unoriented. Thereby, embossing may be performed, for instance, with a heat-driven embossing process. This may be a cost-effective process.

Preferably, the combined carrier substrate and the coating layer is a mono-material with at least 90%, and preferably 95% identical polymer compound.

This has the advantage that recycling is improved as it allows mechanical recycling, which may be an extraordinarily efficient recycling process.

Preferably, the identical polymer compound consists of an identical monomer unit or an identical combination of plural monomer units, and is selected from the list comprising polyester, polyolefin.

These has the advantage that the monomers are relatively cheap and easily available. Hence, the production of the film is improved.

The monomer unit of polyester may comprise aromatic polyester, such as PEF. PEF is becoming more and more popular as it is bio-based and offers advantages in terms of thermal and barrier properties. Further, it is appreciated that also bio-degradable polyesters can be used according to the present invention. The term "bio-degradable" as used herein, may be understood as plastics that can be decomposed by the action of living organisms. Example of such bio-degradable polyester may be PHB, which is particularly attractive because of its compostable characteristics. It is noticed that usage of PLA as a further example of a bio-degradable polyester is also of growing importance as it can be economically produced from renewable resources.

Further examples of polyesters may be PET and PBT. Moreover, examples of polyolefins may be PE and PP.

Overall, the monomers, as used in the film according to the present disclosure, can facilitate an economically more efficient process and can make a valuable contribution to higher sustainability.

In one embodiment, the oriented and at least partially crystalline thermoplastic polymer may be a mono oriented or a biaxially oriented thermoplastic polymer.

A mono oriented thermoplastic polymer may be a polymer that is stretched so as to orientate the polymeric chains parallel to one another (e.g. a first direction). Preferably, the chains are oriented to the machine direction (MD).

Such mono oriented polymers may have the advantage that they can be produced in a cost-effective and simplified manner. Further, for some applications, easy tear properties in one direction may be desired, for which mono oriented polymers have proven to be beneficial.

Preferably, the oriented and at least partially crystalline thermoplastic polymer is a biaxially oriented thermoplastic polymer.

A biaxially oriented (BO) thermoplastic polymer may be a polymer that is stretched so as to orientate the polymeric chains parallel to one another (e.g. a first direction). The chains may be parallel to the plane of the film. In addition, the chains of a biaxially oriented polymer may be oriented in a direction substantially perpendicular to the first direction.

Such orientation exhibits improved clarity, high tensile properties, improved flexibility and toughness. Further, improved barrier properties may be attributable to such an orientation. In addition, improved oil and grease resistance can be achieved.

It is noted that, if one polymer is a BO polymer, it may still be referred to as the "identical" polymer within the meaning of the present disclosure.

In a preferred embodiment, the film further comprises a release layer applied on the unoriented polymer layer (the coating layer) on the side opposite to the carrier substrate.

This has the advantage that a layer is provided, which can facilitate that the film may be used as part of a release liner. For instance, the release layer may provide a releasable surface, such that an additional layer (which may include printing and an adhesive) could be applied to the film without permanently being attached to the film. Such an additional layer may easily be removed from the remaining layers of the film by way of the releasable surface.

Preferably, the release layer comprises a layer of silicone coating.

This has the advantage that mature technologies can be used to produce the film. Silicone facilitates the manufacturing process. Further, tinted silicones may be applied. In addition, silicone aids in providing a releasable surface, such that any additional layer applied to the film can more easily be removed from the film as described herein.

In a particular example, the release layer may comprise PDMS (as described elsewhere herein).

In a further embodiment, printing is provided, preferably between the carrier substrate and the coating layer.

This has the advantage that the appearance is improved, which is appreciated by a user/consumer. The printing is not limited and comprises any kind of printing. The printing may be particularly designed for special applications and/or use cases. In one example, the printing can comprise one or more of and or a combination of a graphical element, a grapheme, a picture, artwork, a letter, a symbol or the like. In one example, a natural look can be provided if this is desired. In a further example, the printing may include a company logo, an advertising slogan, or an alert symbol. Some of these printings may be particularly useful for the packaging industry.

Alternatively, or additionally, a printing may be provided on top of the coating layer, e.g. the printing may be provided on the side of the coating layer opposite to the side facing the carrier substrate.

The printing may be a separate layer or may be applied on a layer. Printing may be applied by any kind of printing techniques, such as rotogravure printing, flexography, digital printing, offset printing, inkjet printing and/or laser marking. This allows prints of high quality. Digital printing may have the advantage that printing is performed substantially contactless.

Preferably, in the film as described herein, the coating layer is coated to the carrier substrate by an extrusion coating process and/or a lamination process.

This has the advantage that the manufacturing process is simplified.

Different kinds of lamination processes may be applicable and are certainly encompassed by the present disclosure. For instance, heat lamination with adhesives or ultrasonic lamination may be applied.

It is beneficial that a conventional embossing roll or a chill roll may be used for coating. As an example, extrusion may be performed with the aid of a structured chill roll. A chill roll may have an outer and inner shell so as to cool the hot (and molten) polymer material with the aid of a chill medium (e.g. water). Said chill medium may be guided through the chill roll.

Preferably, the combined carrier substrate and coating layer has a tensile strength of at least 50 N/mm2, preferably at least 60 N/mm², more preferably at least 70 N/mm², more preferably at least 80 N/mm², more preferably at least 85 N/mm², more preferably at least 90 N/mm², more preferably at least 95 N/mm², more preferably at least 100 N/mm², more preferably at least 105 N/mm², more preferably at least 110 N/mm², more preferably at least 115 N/mm², more preferably at least 120 N/mm², more preferably at least 125 N/mm², most preferably at least 130 N/mm², preferably when measured in a cross direction (CD) of the carrier substrate.

This has the advantage that the film has sufficient mechanical properties to withstand impacts due to handling and/or the environment.

In one example, the tensile strength may be the maximum stress that the carrier can withstand while being stretched or pulled before breaking. Such tensile strength may be measured according to a machine direction (MD) or a cross direction (CD) of the carrier substrate. Exemplarily, test conditions for films and sheets according to DIN EN ISO 527/3 and/or ASTM D882 may be used to derive the tensile strength as disclosed herein.

Preferably, the carrier substrate contains two or more polymer layers.

Such a carrier substrate may be manufactured by way of coextrusion (as described elsewhere herein). Particularly, the carrier substrate may contain three or more polymer layers. As an example, one of the layers contained by the carrier substrate may be a sealing layer. Such a sealing layer may be made of a material similar to the one used in the carrier substrate, such as a PP or PE.

Further, in a preferred embodiment, the carrier substrate layer comprises a barrier layer.

A barrier layer may be understood as any layer that at least partially prevents or hinders a fluid, particle or the like from passing through the film. In one example, the barrier layer has the advantage of preventing any fluid and/or particle exchange of a good, such as food applications, to an exterior. This may aid in increasing shelf life. Further, the barriers may also be useful to protect against environmental impacts, such as wind, water, fire, rain, oil or the like.

In one example, the carrier substrate or the film may be obtained by the process of coextrusion or lamination. Coextrusion is particularly advantageous, as it allows for an easy provision of a film comprising multiple layers.

Preferably, the coating layer is provided on both sides of the carrier substrate.

Preferably, the film comprises one or more further layers, wherein the one or more further layers are any one of the following: a polyester layer, a polyolefin layer, a bonding lacquer layer, a silicone layer. It is noted that the one or more further layers may comprise any one of the polymer compounds as used herein with respect to the *"identical"* polymer compound.

Preferably, the ratio of the thickness of the carrier substrate to the coating layer is in the range of e.g. about 40% to 60% to about 95% to 5%, such as 56% to 44% or 80% to 20%. The skilled person understands that, if reference is made to "40% to 60% to about 95% to 5%", the first two and the last two percentage values each may belong to one set, substantially representing one end of the "range" of the ratio of the thickness referred to herein, respectively.

Preferably, the ratio of the thickness of the carrier substrate to the coating layer may be at least 40% to 60%, preferably at least 45% to 55%, more preferably at least 50% to 50%, more preferably at least 55% to 45%, more preferably at least 60% to 40%, more preferably at least 65% to 35%, more preferably at least 70% to 30%, more preferably at least 75% to 25%, more preferably at least 80% to 20%, more preferably at least 85% to 15%, more preferably at least 90% to 10%, most preferably at least 95% to 5%.

Alternatively or additionally, the ratio of the thickness of the carrier substrate to the coating layer may be at most 95% to 5%, preferably at most 90% to 10%, more preferably at most 85% to 15%, more preferably at most 80% to 20%, more preferably at most 75% to 25%, more preferably at most 70% to 30%, more preferably at most 65% to 35%, more preferably at most 60% to 40%, more preferably at most 55% to 45%, more preferably at most 50% to 50%, more preferably at most 45% to 55%, most preferably at most 40% to 60%.

These ratios of the thicknesses, on the one hand, have proven to be adequate to provide sufficient mechanical properties (high thickness of the carrier may be desirable), while on the other hand, the material used is kept on a moderate level and sufficient structuring may be provided (high thickness of the coating layer(s) may be desirable). Thus, the inventors found that an optimal ratio should be struck.

### Method

The objects are further achieved, at least partly by a method for manufacturing a film, such as a film as described herein, the method comprising the steps of:
- providing a carrier substrate substantially comprising an oriented and at least partially crystalline thermoplastic polymer, and
- applying a coating layer on at least one side of the carrier substrate, the coating layer being an unoriented thermoplastic polymer;
wherein, the combined carrier substrate and the coating layer substantially consists of at least 70%, more preferably at least 75%, more preferably at least 80%, more preferably at least 85%, more preferably at least 90%, most preferably at least 95% identical polymer compound.

It is understood that substantially the same advantages and features mentioned with respect to the film equally apply to the method for manufacturing a film. Further, the features may be combined and/or interchangeably applied to aspects, embodiments and examples of the film and the method, respectively.

The respective advantages of the method are described herein with respect to the film.

Preferably, the method comprises further method steps so as to provide the features mentioned in the context of the film.

### Brief description of the accompanying embodiments

In the following, preferred embodiments are described, by way of example only. Reference is made to the following accompanying figures:
- Fig. 1: shows a schematic cross-section of a film according to a preferred embodiment of the invention.
- Fig. 2: shows a schematic cross-section of a film according to a further preferred embodiment of the invention.
- Fig. 3: shows a schematic flow chart of a method according to an embodiment of the invention.

### Detailed description of the embodiments

### Definitions

The machine direction (MD) as used herein may be understood as the direction into which a machine, e.g. a belt, is running when a layer, film or the like is manufactured and/or in which the manufactured material is rolled.

The cross direction (CD) may be understood as substantially rectangular to the MD. It may also, or alternatively, be referred to as the traverse direction. To further illustrate the MD and CD, the following may be helpful and readily known by the skilled person: if a layer, film or the like has substantially the same physical properties in both directions (e.g. MD and CD), the layer, film or the like may be referred to as isotropic.

A "polyolefin" or "polyolefins" are a type of polymer with the general formula (CH₂CHR)ₙ where R is an alkyl group. They may also be referred to as polyalkenes.
"CoEx", as used herein, refers to coextrusion.
"PE" as used herein, refers to polyethylene.
"PP", as used herein, refers to polypropylene.
"PA", as used herein, refers to polyamides.
"BO", as used herein, refers to biaxially oriented, e.g. "BOPP" refers to biaxially oriented polypropylene.
"PET", as used herein, refers to polyethylene-terephthalate.
"PBT", as used herein, refers to polybutylene-terephthalate.
"PHB", as used herein, refers to polyhydroxy-butyrate.
"PLA", as used herein, refers to polylactide.
"PEF", as used herein, refers to polyethylene-furanoate.
"PDMS", as used herein, refers to poly-di-methyl-siloxane.
"Sil", as used herein, refers to silicone.

### Figures

Subsequently, presently preferred embodiments will be outlined, primarily with reference to the above Figures. It is noted that further embodiments are certainly possible, and the below explanations are provided by way of example only, without limitation. Further, the present invention can also be used in other embodiments not explicitly disclosed hereafter. Moreover, as detailed below, the embodiments are compatible with each other, and individual features of one embodiment may also be applied to another embodiment.

Throughout the present figures and specification, the same reference numerals refer to the same elements. The figures may not be to scale, and the relative size, proportions, and depiction of elements in the figures may be exaggerated for clarity, illustration, and convenience.

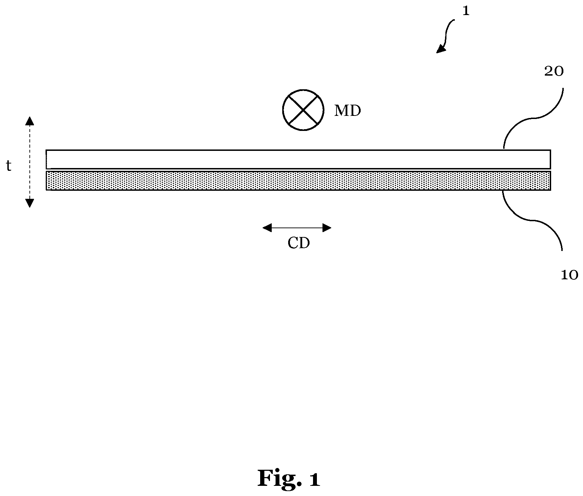

**Fig. 1** shows film 1 comprising a carrier substrate **10**. The carrier substrate 10 is substantially comprising of an oriented and at least partially crystalline thermoplastic polymer. The film 1 further comprises a coating layer 20, which is an unoriented thermoplastic polymer and which is coated on at least one side of the carrier substrate 10. Thus, two coating layers 20 may be coated on both sides of the carrier substrate 10 (in Fig. 1, only a configuration in which the coating layer 20 is coated on one side is shown). Such coating can be performed by an extrusion coating process or a lamination process.

The oriented and at least partially crystalline thermoplastic polymer of the carrier substrate 10 is biaxially oriented. The carrier substrate 10 has a tensile strength of at least 100 N/mm2 in a cross direction (CD). It is understood that this value may vary depending on the polymer used. The cross direction is indicated in Fig. 1 by way of an example. Further, as understood by the skilled person, the CD could also be reversed by about 180°. Further still, the main direction (MD) is indicated by the circle and the cross, such that the MD is in the image plane. Further, as understood by the skilled person, the MD could also be reversed by about 180° (e.g. out of the image plane).

The partially crystalline and oriented polymer exhibits one or more properties of improved clarity, high tensile properties, improved flexibility and toughness. Further, improved barrier properties may be attributable to such an orientation. In addition, improved oil and grease resistance can be achieved.

On the other hand, providing the coating layer being an unoriented thermoplastic polymer coated on at least one side of the carrier substrate has the advantage that structuring, or embossing is facilitated. This allows for the creation of a structure so as to improve, for instance, the release properties of the coating layer. Further, it is beneficial that this coating layer allows for larger embossing structures than merely those in "holographic" films.

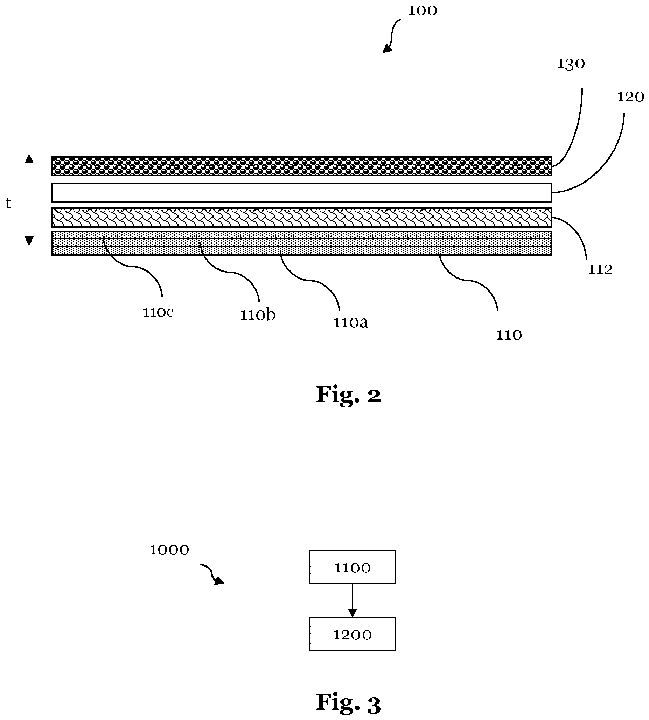

The combination of the carrier substrate 10 and the coating layer 20 have such a thickness (the thickness direction is indicated by "t" in Figs. 1 and 2) that it can be structured or embossed by a depth of at least 5 µm and/or of at most 50 µm. Furthermore, the layers may be provided such that the coating layer 20 has a thickness such that is capable of being structured or embossed at a depth of between 5 µm and 50 µm.

The combined carrier substrate 10 and the coating layer 20 substantially consist of at least 70% identical polymer compound.

The combined carrier substrate 10 and coating layer 20 could, in particular, be a mono-material with at least 90%, and preferably 95% identical polymer compound.

The identical polymer compound consists of an identical monomer unit or an identical combination of plural monomer units. The monomer units can be selected from the list comprising polyester (e.g. PET, PBT, PEF, PHB, PLA) and polyolefin (e.g. PE, PP).

This has the advantage that recycling is improved as it allows mechanical recycling, which may be an extraordinarily efficient recycling process.

**Fig. 2** shows a film 100 according to a further embodiment of the invention. The film 100 comprises a carrier substrate 110 and a coating layer 120, as described in the embodiment of Fig. 1. Reference signs 110 and 120 of Fig. 2 correspond to the elements referred to by reference signs 10 and 20 of Fig. 1, respectively. The film 100 further comprises a release layer 130 applied on the unoriented polymer layer on the side opposite to the carrier substrate 110. As described herein, the release layer 130 is optional.

The release layer 130 comprises a layer of silicone coating. Any kind of silicone may be used. In one example, the silicone is curable, e.g. by heat and/or UV.

Further, as can be seen in Fig. 2, the film 100 comprises a printing 112 provided between the carrier substrate 110 and the coating layer 120. The printing 112 may comprise decals, decorative elements, different colors, inks, paints, pigments, symbols, words, letters or any combination thereof. Any kind of printing process may be applicable, such as rotogravure printing, flexography, digital printing, offset printing, inkjet printing and/or laser marking. The printing 112 could also be arranged on top of the coating layer 120 (e.g. in Fig. 2 above the coating layer 120 rather than below as indicated in Fig. 2). Thereby, the printing 112 may be applied on the side of the coating layer 120 opposite to the side facing the carrier substrate 110.

The carrier substrate 110 may comprise two or more polymer layers 110a, 110b, as optionally indicated in Fig. 2. In particular, the carrier substrate 110 may comprise three polymer layers 110a, 110b, 110c (as optionally indicated in Fig. 2). In such a case, it may be beneficial that one or more of, preferably one of, the polymer layers 110a, 110b, 110c is a sealing layer (such a sealing layer may be made of PE). The carrier substrate 110 could also comprise a barrier layer. In one example, the carrier substrate 110 comprising the barrier layer can be obtained by coextrusion or lamination. Coextrusion is particularly advantageous, as it allows easy provision of a film comprising multiple layers. This may be readily recognizable in the final product, as such coextrusion increases the product quality and robustness (whilst complying with harsh restrictions as regards barrier properties), as compared to, e.g. mono-extrusion. However, mono-extrusion may be particularly beneficial in case merely a low number of layers is desired.

Further layers are certainly encompassed by this embodiment, and the film is not limited to the ones presented. For instance, any further layer of polyester, polyolefin, bonding lacquer, silicone or the like may be comprised by the film 100.

In the above embodiments, the ratio of the thickness of the carrier substrate 10, 110 to the coating layer 20, 120 is in the range of e.g. 40% to 60% to about 95% to 5%, such as 56% to 44% or 80% to 20%. This may apply, for instance, if one side or both sides of the carrier substrate 10, 110 is/are coated by the coating layer 20, 120.

**Fig. 3** shows a schematic flow chart of method 1000 according to an embodiment of the invention. The method 1000 for manufacturing a film 1, such as a film 1 as described herein, the method 1000 comprising the following steps.

Step of providing 1100 a carrier substrate 10 substantially comprising an oriented and at least partially crystalline thermoplastic polymer, and
step of applying 1200 a coating layer 20 on at least one side of the carrier substrate 10, the coating layer 20 being an unoriented thermoplastic polymer.

The resultant combined carrier substrate 10 and the coating layer 20 substantially consists of at least 70%, more preferably at least 75%, more preferably at least 80%, more preferably at least 85%, more preferably at least 90%, most preferably at least 95% identical polymer compound.

### Examples of further layers

The following examples may further aid in understanding the film as described herein without wishing to be bound and/or limited to these examples.

In the below examples, the sign "j" indicates the separation between two layers. The term "(Sil)" indicates that silicone may be optional. Further, the sign "(PP)" indicates that the PP layer may be optional.
1^{st} example: (PP)/BOPP carrier/PP/(Sil).
2^{nd} example: PP/BOPP carrier/PP/Sil.
3rd example: Sil/PP/BOPP carrier/PP/Sil.
4th example: (Sil)/PP/bonding lacquer/BOPP carrier/bonding lacquer/PP/Sil.
5th example: (Sil)/PP/CoEx BOPP (-outer layers PP)/PP/Sil.
6th example: (Sil)/PP/CoEx BOPP carrier/PP/Sil.
7th example: (Sil)/PP/bonding lacquer/CoEx BOPP (-inner layer(s) PP)/bonding lacquer/PP/Sil.
8th example: PET/BOPET carrier/PET/Sil.
9th example: Sil/PET/BOPET carrier/PET/Sil.
10th example: (Sil)/PET/bonding lacquer/BOPET carrier/bonding lacquer/PET/Sil.

In the above examples, the film may comprise a barrier layer. Such a barrier layer may be provided within a BOPP layer, which may further preferably be obtained by CoEx. Such a barrier layer may alternatively or additionally be provided between any of the layers of the above examples.

Further examples of the film of the present invention, and their resultant physical properties, are listed in the following table 1:

**TABLE 1: Further examples 11, 12 and 13 of films according to the invention. The Fmax CD (cross direction) values may be measured according to DIN EN ISO 527/3 and/or ASTM D882 test protocols. It is noted that the tensile strength as used herein is the maximum stress that a probe can withstand during a tensile test (as can be derived from DIN EN ISO 527/1). The terms "side 1" and "side 2" of the embossing depth indicate the depths of the coating layers on each side of the carrier substrate.**

| **Example** | **11** | **12** | **13** |
|---|---|---|---|
| **Name** | PP/BOPP/PP | PP/BOPP/PP | PP/BOPP/PP |
| **Thicknesses [µm]** | 55/70/55 | 15/70/15 | 15/70/15 |
| **Overall thickness [µm]** | 183 | 100 | 105 |
| **Fmax CD [N]** | 268 | 299 | 300 |
| **Fmax CD [N/mm²]** | 56 | 118 | 113 |
| **Embossing depth side 1 [µm]** | 48 | - | 7 |
| **Embossing depth side 2 [µm]** | 66 | 3 | 3 |

The difference between the sum of the "thicknesses" and the overall thickness in the above table results from further layers comprised by the film.

In the above examples 11, 12 and 13, the grammage of the carrier (e.g BOPP) can be 52.5 g/m².

In the above example 11, the grammage of the coating layer (e.g. PP) can be approximately 100 g/m², and the amount of identical polymer (e.g. PP) can be at least 85% (in weight-%).

In the above examples 12 and 13, the grammage of the coating layer (e.g. PP) can be approximately 27 g/m², and the amount of identical polymer (e.g. PP) can be at least 90% (in weight-%).

It is noted that the above embodiments and examples may be combined with further aspects as described herein, and details of the embodiments and examples may also be omitted, as will be understood by the skilled person. The scope of protection is determined by the claims and is not limited by the embodiments and examples disclosed in the above figures.

It will be apparent to those skilled in the art that numerous modifications and variations of the described examples and embodiments are possible in light of the above teaching. The disclosed examples and embodiments are presented for purposes of illustration only. Other embodiments may include some or all of the features disclosed herein. Therefore, it is the intent to cover all such modifications and alternate embodiments as may come within the true scope of this invention.

### List of reference signs

- 1,100: film
- 10, 110: carrier substrate
- 100a, 100b, 100c: polymer layer
- 12, 112: printing layer
- 20, 120: coating layer
- 30, 130: release layer

- MD: machine direction
- CD: cross direction
- t: thickness

- 1000: method
- 1100: method step: providing
- 1200: method step: applying

## Claims

1. A film (1) comprising:
- a carrier substrate (10, 110) substantially comprising an oriented and at least partially crystalline thermoplastic polymer, and
- a coating layer (20, 120) being an unoriented thermoplastic polymer coated on at least one side of the carrier substrate (10);
wherein, the combined carrier substrate (10) and the coating layer (20) substantially consists of at least 70%, preferably at least 75%, more preferably at least 80%, more preferably at least 85%, more preferably at least 90%, most preferably at least 95% identical polymer compound.

2. The film (1) according to the preceding claim, wherein the combined carrier substrate (10) and coating layer (20) has a thickness such that it is capable of being structured or embossed at a depth of between 5 µm and 50 µm.

3. The film (1) according to any of the preceding claims, wherein the coating layer (20) having a thickness such that is capable of being structured or embossed at a depth of between 5 µm and 50 µm.

4. The film (1) according to any of the preceding claims, wherein the combined carrier substrate (10) and coating layer (20) is a mono-material with at least 90%, and preferably 95% identical polymer compound.

5. The film (1) according to any of the preceding claims, wherein the identical polymer compound consists of an identical monomer unit or an identical combination of plural monomer units, and is selected from a list comprising polyester and polyolefin,
wherein, optionally, polyester comprises polyethylene-terephthalate (PET), polybutylene-terephthalate (PBT), polyethylene-furanoate (PEF), polyhydroxy-butyrate (PHB), polylactide (PLA) and the like,
wherein, optionally, polyolefin comprises polyethylene (PE), polypropylene (PP) and the like.

6. The film (1) according to any of the preceding claims, wherein the oriented and at least partially crystalline thermoplastic polymer is a biaxially oriented thermoplastic polymer.

7. The film (1) according to any of the preceding claims, further comprising a release layer (130) applied on the coating layer (120) on the side opposite to the carrier substrate (10).

8. The film (1) according to claim 7, wherein the release layer (130) comprises a layer of silicone coating.

9. The film (1) according to any of the preceding claims, wherein a printing (112) is provided, preferably between the carrier substrate (110) and the coating layer (120).

10. The film (1) according to any of the preceding claims, wherein coating layer (20) is coated to the carrier substrate (10) by one of extrusion coating process or a lamination process.

11. The film (1) according to claim 6, wherein the combined carrier substrate (10) and coating layer (20) has a tensile strength of at least 50 N/mm², preferably at least 60 N/mm², more preferably at least 70 N/mm², more preferably at least 80 N/mm², more preferably at least 85 N/mm², more preferably at least 90 N/mm², more preferably at least 95 N/mm², more preferably at least 100 N/mm², more preferably at least 105 N/mm², more preferably at least 110 N/mm², more preferably at least 115 N/mm², more preferably at least 120 N/mm², more preferably at least 125 N/mm², most preferably at least 130 N/mm², when measured in a cross direction (CD) of the carrier substrate (10).

12. The film (1) according to any of the preceding claims, wherein the carrier substrate (10, 110) contains two or more polymer layers (110a, 110b).

13. The film (1) according to any of the preceding claims, comprising one or more further layers, wherein the one or more further layers are any one of the following: a polyester layer, a polyolefin layer, a bonding lacquer layer, a silicone layer.

14. The film (1) according to any of the preceding claims, wherein the ratio of the thickness of the carrier substrate (10, 110) to the coating layer (20, 120) is in the range of about 40% to 60% to about 95% to 5%.

15. A method (1000) for manufacturing a film (1), such as a film (1) according to any one of the preceding claims, the method (1000) comprising the following steps:
- providing (1100) a carrier substrate (10, 110) substantially comprising an oriented and at least partially crystalline thermoplastic polymer, and
- applying (1200) a coating layer (20, 120) on at least one side of the carrier substrate (10), the coating layer (20) being an unoriented thermoplastic polymer;
wherein, the combined carrier substrate (10) and the coating layer (20) substantially consists of at least 70%, preferably at least 75%, more preferably at least 80%, more preferably at least 85%, more preferably at least 90%, most preferably at least 95% identical polymer compound.
